# EUROPÄISCHE PATENTSCHRIFT

(11) **EP 3 055 177 B1**
(45) Veröffentlichungstag und Bekanntmachung des Hinweises auf die Patenterteilung: **19.07.2017**
(21) Anmeldenummer: 14790532.7
(22) Anmeldetag: 10.10.2014
(51) Int. Cl.: B60T 17/08, F16D 65/28

(54) **BREMSZYLINDER**
BRAKE CYLINDER
CYLINDRE DE FREIN

(30) Priorität: 11.10.2013 DE 102013016890
(43) Veröffentlichungstag der Anmeldung: 17.08.2016
(73) Patentinhaber: KNORR-BREMSE Systeme für Nutzfahrzeuge GmbH, 80809 München (DE)
(72) Erfinder: NEMETH, Huba, H-1116 Budapest (HU); SZÜCS, Gabor, 6000 Kecskemét (HU); MLINARCSEK, Csaba, H-1163 Budapest (HU)
(86) Internationale Anmeldenummer: PCT/EP2014/071717
(87) Internationale Veröffentlichungsnummer: WO 2015/052308

(56) Entgegenhaltungen:
- WO-A1-2008/027018
- DE-A1-102008 053 459
- US-A1- 2007 017 757

## Beschreibung

Die vorliegende Erfindung betrifft einen Bremszylinder nach dem Oberbegriff des Anspruchs 1. Ferner schafft die Erfindung ein Montageverfahren nach Anspruch 10.

Derartige Bremszylinder sind aus dem Stand der Technik einschlägig bekannt.

Eine herkömmliche Radbremse eines Fahrzeugs beinhaltet u.a. eine Betriebsbremse, mit der eine Bremskraft erzeugt wird, die für die Abbremsung des Fahrzeugs im Fahrbetrieb erforderlich ist. Eine Betriebbremse insbesondere, wenn sie pneumatisch aktuiert wird- weist einen Bremszylinder, dessen Kolbenstange z.B. auf eine Gestänge wirkt, das über einen Bremssattel die Zustellkraft der Betriebsbremse erzeugt. Nach dem Stand der Technik weist ein Bremszylinder üblicherweise wenigstens zwei Gehäuseteile auf, wobei beide Gehäuseteile gemeinsam mit einer Membran, die als Kolben dient, mit einer Klemmschelle zusammengespannt werden und so das Bremszylindergehäuse mit integrierter Membran bzw. Kolben bilden.

In der US 2 541 205 A1 ist eine einteilige Klemmschelle offenbart, die zwei rohrförmige bzw. zylindrische Bauteile fluiddicht zusammenspannt. Die beiden Enden der rohrförmigen bzw. zylindrischen Bauteile weisen dazu jeweils an ihrer der Klemmschelle zugewandten Seite keilförmige Verdickung bzw. einen keilförmigen Kragen auf. Beide Kragen gemeinsam bilden einen keilriemenförmigen Querschnitt aus, die von der erfindungsgemäßen Klemmschelle übergriffen. Die Klemmschelle ist als Schraubschelle gestaltet, d.h. die Klemmkraft der Klemmschelle wird kraftschlüssig über eine bezogen auf den Umfang tangential angeordnete Schraube - Mutter-Verbindung erzeugt.

In der US 4 960 036 ist eine in radialer Richtung zweigeteilte Klemmschelle offenbart, mit der die Gehäusehälften eines Bremszylinders und eine Membran zusammengespannt werden. Die Gehäusehälften weisen jeweils an ihren offenen Seiten einen Kragen bzw. eine Verdickung auf. Die Klemmkraft der zweiteiligen Klemmschelle wird kraftschlüssig über zwei bezogen auf den Umfang jeweils tangential angeordnete Schrauben-Mutter-Verbindungen erzeugt.

Ferner ist in der US 5 193 432 A ist eine einteilige Klemmschelle offenbart, mit der ein manipulationssicherer Bremszylinder zur Verfügung gestellt werden soll. Die Klemmschelle wird über eine radial angeordnete Schrauben-Mutter-Verbindung kraftschlüssig erzeugt.

Nachteilig an o.g. Stand der Technik ist jeweils, dass die jeweils offenbarte Klemmschelle die beiden Gehäusebauteile nicht vollständig umschlingt, da zur Erzeugung einer entsprechenden Klemmkraft ein Lücke zwischen den Klemmschellenenden funktionsbedingt vorgehalten werden muss. Dies erzeugt einen unterbrochenen, über den gesamten Umfang der Klemmschelle nicht gleichförmigen Kraftverlauf. Die zusammengespannten Bauteile erfahren deshalb lokal betragsmäßig erhebliche Flächenpressungen, die sich zumindest nicht lebensdauerfördernd auf die Bauteile auswirken. Darüber hinaus nimmt eine Schrauben-Mutter-Verbindung einen erheblichen Bauraum ein, der häufig in den beengten Bauraumbereichen eines Bremszylinders nicht uneingeschränkt zur Verfügung steht.

Darüber hinaus wird in der US 2007 / 0017757 A1 ein manipulationssicherer Federspeicherzylinder vorgestellt, bei dem zwei Gehäuseteile und eine Membran zusammengespannt werden. Die dazu erforderliche Klemmkraft wird formschlüssig durch Schnapphaken erzeugt, die in einem Muster am Umfang eines der beiden Gehäuseteile angeordnet sind. Die Schnapphaken rasten in entsprechende Vertiefungen, die in dem anderen zusammenzuspannenden Gehäuseteil angeordnet sind. Auf eine explizite Klemmschelle bzw. zusätzliche Teile, die die Klemmfunktion erzeugen, wird bei der in der US 2007 /0017757 A1 offenbarten Lösung verzichtet.

Nachteilig an der Lösung nach US 2007 / 0017757 A1 ist die Integration der Klemmfunktion in die Gehäuseenden. Dafür ist zumindest ein Gehäuseteil aus einem gut umformbaren Werkstoff herzustellen. Darüber hinaus erfordert die offenbarte Lösung ein komplexes Montageverfahren und -werkzeug. Durch die Geometrie am Gehäuseende zumindest eines Gehäuseteils sind enge Umformradien erforderlich, die zu Mikrorissen in der Oberflächenschutzbeschichtung führen können, so dass in dem Fall die Gefahr für eine frühzeitig einsetzende Korrosion gegeben ist.

Der Erfindung liegt daher die Aufgabe zu Grunde, einen Bremszylinder zu schaffen, der die oben genannten Nachteile jedenfalls zum Teil überwindet.

Die Erfindung löst dieses Problem durch den Gegenstand des Anspruchs 1.

In einer besonders bevorzugten Ausführungsform der Erfindung wird die formschlüssige Klemmverbindung konstruktiv einfach durch das Verrasten eines gehäuseoberseitigen Klemmrings und eines gehäuseunterseitigen Klemmring realisiert.

In einer weiteren bevorzugten Ausführungsform der Erfindung weist der gehäuseunterteilseitige Klemmring Öffnungen auf, wobei die Öffnungen in einem regelmäßigen Muster auf dem Umfang des gehäuseunterteilseitigen Klemmrings gleichmäßig angeordnet sind, so dass sich eine Öffnung mit einem Umfangsabschnitt ohne Öffnung vorteilhaft abwechselt.

In einer weiteren bevorzugten Ausführungsform der Erfindung weist der gehäuseoberteilseitige Klemmring Schnapphaken auf, wobei die Schnapphaken in einem regelmäßigen Muster auf dem Umfang des gehäuseobterteilseitigen Klemmrings gleichmäßig angeordnet sind, so dass sich ein Schnapphaken mit einem Umfangsabschnitt ohne Schnapphaken baulich einfach abwechselt.

Weitere vorteilhafte Ausführungen des Bremszylinders sind den übrigen Unteransprüchen zu entnehmen.

Ausführungsbeispiele der Erfindung sind in den Zeichnungen dargestellt und werden im Folgenden näher beschrieben. Es zeigen:
- Figur 1:: eine Schnittdarstellung eines erfindungsgemäßen Bremszylinders;
- Figur 2: eine Ausschnittsvergrößerung in Schnittdarstellung des Bremszylinders nach Fig. 1;
- Figur 3:: eine räumliche Darstellung eines erfindungsgemäßen Bremszylinders;
- Figur 4:: eine Explosionsdarstellung eines erfindungsgemäßen Bremszylinders, wobei die Explosionsdarstellung auf die Gehäusebauteile sowie auf eine Membran beschränkt ist.

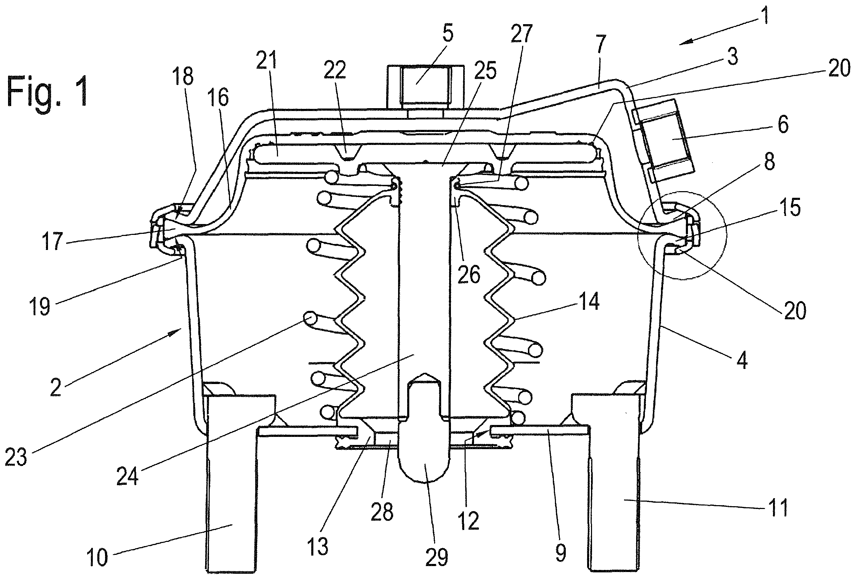

In Fig. 1 ist ein Bremszylinder 1 im Vollschnitt dargestellt. Der Bremszylinder 1 weist ein Bremszylindergehäuse 2 auf, dass sich in ein Gehäuseoberteil 3 und ein Gehäuseunterteil 4 aufteilt.

Das Gehäuseoberteil 3 weist eine kegelstumpförmige Grundgeometrie auf und wird im Betrieb des Bremszylinders 1 mit einem unter Druck stehendem Fluid beaufschlagt. Der Bremszylinder 1 wird mit Druckluft als Fluid betrieben.

Das Gehäuseoberteil 3 weist ferner Fluidleitungsanschlüsse 5, 6 für die Versorgung des Bremszylinders mit Fluid auf. Um bei Bauraumproblemen mehrere Anschlussmöglichkeiten bereitzustellen, ist ein Fluidleitungsanschluss 5 stirnseitig-vertikal realisiert und der andere Fluidleitungsanschluss 6 über eine Ausstülpung 7 des Gehäuseoberteils 3 näherungsweise horizontal realisiert. Da der Bremszylinder 1, sofern er mit einem gasförmigen Fluid -wie z.B. Druckluft- betrieben wird, als einfach wirkender Zylinder betrieben wird, ist jeweils ein Fluidleitungsanschluss 5, 6 mit der Fluidzuleitung (nicht dargestellt) beaufschlagt, während der jeweils andere Fluidleitungsanschluss 5, 6 mit einer Entlüftung (nicht dargestellt) versehen ist. Darüber hinaus weist das Gehäuseoberteil 3 an seiner offenen Seite einen umlaufenden Kragen 8 auf.

Das Gehäuseunterteil 4 weist einen Gehäuseboden 9 auf. Der Gehäuseboden 9 weist zumindest zwei Befestigungsmittel auf, hier -rein beispielhaft - als Gewindebolzen 10, 11 ausgeführt, mit denen der Bremszylinder 1 an einer Bremse (nicht dargestellt) befestigt wird. Die Gewindebolzen 10, 11 sind am Gehäuseboden 9 -hier beispielhaft- durch Schmelzschweißen befestigt. Es ist aber auch möglich, die Gewindebolzen 10, 11 mit einem anderen Fügeverfahren am Gehäuseboden 9 zu befestigen. Der Gehäuseboden 9 weist ferner eine Öffnung 12 auf. In die Öffnung 12 ist eine Dichtung 13 eingesetzt, die in Vertikalrichtung einen Dichtungsbalg 14 ausbildet, wobei sich der Dichtungsbalg 14 in Richtung Gehäuseoberteil 3 erstreckt. Der Dichtungsbalg 14 ist hier -rein beispielhaft- als Faltenbalg ausgebildet. Die Dichtung 13 zentriert ferner eine Druckfeder 23. Das Gehäuseunterteil 4 weist darüber hinaus an seiner offenen Seite einen Kragen 15 auf.

Ferner weist der Bremszylinder 1 eine Membran 16 auf. Die Membran 16 weist an ihrer Außenkante eine Wulst 17 auf. Die Wulst 17 weist einen keilförmigen Grundquerschnitt auf, wobei die Wulst mit ihren Keilflanken 18, 19 sich an den jeweiligen Kragen 8, 15 des Gehäuseoberteils 3 bzw. des Gehäuseunterteils 4 schmiegt und so eine Dichtfunktion zwischen den Gehäuseoberteil 3 und dem Gehäuseunterteil 4 erzeugt. Die Membran 16 weist mehrere ringförmige Vertiefungen 20 auf, die zur Zentrierung einer Druckplatte 21 dienen. Die Membran 16 ist vorzugsweise aus einem gummi-elastischen Werkstoff hergestellt.

Die Druckplatte 21 weist eine kreisförmige Sicke 22 auf, durch die eine Druckfeder 23 im Gehäuseoberteil 3 zentriert und bzw. positioniert ist. Die Druckfeder 23 weist - hier rein beispielhaft- einen kreisförmigen Drahtquerschnitt und -ebenfalls rein beispielhaft- eine tonnenförmige Grundgeometrie auf. Die Druckfeder 23 bewirkt im einfachwirkenden Bremszylinder 1 die Rückstellung einer Kolbenstange 24. Die Kolbenstange 24 bildet an ihrem gehäuseoberteilseitigen Ende einen kegelförmigen Kopf 25 aus und liegt mit dem kegelförmigen Kopf 25 an der Druckplatte 21 an. Der Dichtungsbalg 14 bildet an seinem gehäuseoberteilseitigen Ende eine Dichtungswulst 26 aus, wobei die Dichtungswulst 26 durch einen Spannring 27 unterhalb des kegelförmigen Kopfes 25 der Kolbenstange 24 festgelegt ist. Die Kolbenstange 24 durchgreift den Dichtungsbalg 24 sowie eine zentrische Öffnung 28 der Dichtung 13. Die Kolbenstange 24 weist an ihrem gehäuseunterteilseitigen Ende ein Druckstück 29 auf, das zentrisch in die Kolbenstange 24 -hier rein beispielhaft- eingeschraubt ist. Alternativ sind auch andere Fügeverfahren möglich. Das Druckstück 29 kontaktiert im eingebauten Zustand des Bremszylinders 1 beispielsweise ein Gestänge (nicht dargestellt), mit dem eine Bremse (nicht dargestellt) zugespannt wird.

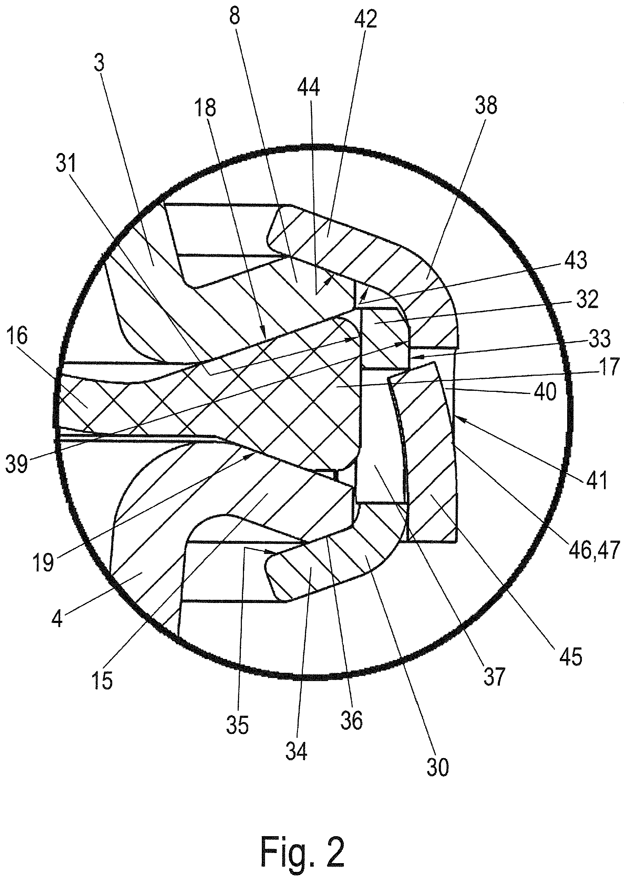

In Fig. 2 ist der Stoßbereich zwischen der Wulst 17 der Membran 16 sowie den jeweiligen Kragen 8, 15 des Gehäuseoberteils 3 bzw. des Gehäuseunterteils 4 gut erkennbar.

Der Stoßbereich weist einen gehäuseunterteilseitigen Klemmring 30 auf, der einen im Wesentlichen J-förmigen Querschnitt aufweist. Der gehäuseunterteilseitige Klemmring 30 schmiegt sich mit der Innenseite 31 seines vertikalen Schenkels 32 an die Außenkante 33 der Wulst 17 der Membran 16. Der abgewinkelte Schenkel 34 des gehäuseunterteilseitigen Klemmrings 30 schmiegt sich mit seiner Innenseite 35 an den Kragen 15 des Gehäuseunterteils 4. Der Kragen 15 weist dazu eine entsprechende Anflächung 36 auf. Der gehäuseunterteilseitigen Klemmring 30 weist ferner Öffnungen 37 an seinem vertikalen Schenkel 32 auf. Die Öffnungen 37 sind in einem regelmäßigen Muster auf dem Umfang des gehäuseunterteilseitigen Klemmrings 30 gleichmäßig angeordnet, so dass sich eine Öffnung 37 mit einem Umfangsabschnitt ohne Öffnung 37 abwechselt. Die Öffnung 37 weist vorzugsweise einen rechteckigen Querschnitt auf. Die Dimension der Öffnungen 37 sind vorzugsweise für alle auf dem Umfang des gehäuseunterteilseitigen Klemmrings 30 befindlichen Öffnungen 37 gleich groß.
Ferner weist der Stoßbereich einen gehäuseoberteilseitigen Klemmring 38 auf, der in Einbaulage einen im Wesentlichen um 180° gedrehten J-förmigen Querschnitt aufweist. Der gehäuseoberteilseitige Klemmring 38 schmiegt sich mit der Innenseite 39 seines vertikalen Schenkels 40 an die Außenseite 41 des gehäuseunterteilseitigen Klemmrings 30. Der abgewinkelte Schenkel 42 des gehäuseoberteilseitigen Klemmrings 30 schmiegt sich mit seiner Innenseite 43 an den Kragen 8 des Gehäuseoberteils 4. Der Kragen 8 weist dazu eine entsprechende Anflächung 44 auf. Der gehäuseoberteilseitigen Klemmring 38 weist ferner Schnapphaken 45 an seinem vertikalen Schenkel 40 auf. Die Schnapphaken 45 sind in einem regelmäßigen Muster auf dem Umfang des gehäuseoberteilseitigen Klemmrings 38 gleichmäßig angeordnet, so dass sich ein Schnapphaken 45 mit einem Umfangsabschnitt ohne Schnapphaken 45 abwechselt. Der Schnapphaken 45 weist eine zur Öffnung 37 korrespondierende Geometrie und Dimension auf.

Der Schnapphaken 45 wird durch Einschneiden des vertikalen Schenkels 40 und anschließendem Ausstellen der durch das Einschneiden gebildete Lasche 46 in Richtung der Innenseite 39 des vertikalen Schenkels 40 des gehäuseoberteilseitigen Klemmrings 38 erzeugt. Das freie Ende 47 der Lasche 46 ist dabei in Richtung des Gehäuseoberteils 3 ausgerichtet und greift in die korrespondierende Öffnung 37 des gehäuseunterteilseitigen Klemmrings 30.

Dadurch wird durch Verrasten des gehäuseunterteilseitigen Klemmrings 30 und des gehäuseoberteilseitigen Klemmrings 38 das Gehäuseoberteil 3 und das Gehäuseunterteil4 unter gleichzeitiger Ausübung einer Klemm- bzw. Dichtkraft auf die Wulst 17 der Membran 16 formschlüssig aufeinander positioniert und festgelegt und das Bremszylindergehäuse 2 gebildet.

Die Schnappverbindung wird durch die Wulst 17 der Membran 16 vorgespannt, da der durch das Gehäuseoberteil 3 und das Gehäuseunterteil 4 eingepresste gummielastische Werkstoff eine entsprechende Gegenkraft auf das Gehäuseoberteil 3 bzw. auf den gehäuseoberteilseitigen Klemmring 38 und auf das Gehäuseunterteil 4 ausübt.

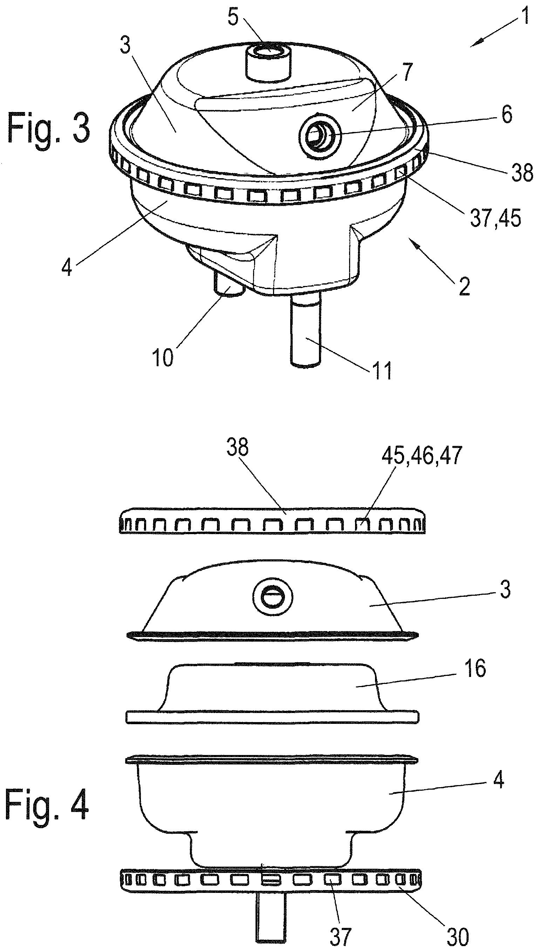

In Fig. 3 sind insbesondere der gehäuseoberteilseitige Klemmring 38 sowie dessen Laschen 46, die in einem regelmäßigen Muster auf dem Umfang seines vertikalen Schenkels 40 angeordnet sind, sowie die Ausstülpung 7 des Gehäuseoberteils 3 gut erkennbar.

In Fig. 4 ist ein Montageverfahren der Gehäusebauteile 3, 4, 30, 38 sowie der Membran 16 dargestellt. Bauteile, die sich nach der Montage im Gehäuseinneren befindet bzw. angeordnet sind, sind wegen der besseren Übersichtlichkeit nicht dargestellt und werden auch nicht explizit erwähnt bzw. behandelt. Es wird im Folgenden davon ausgegangen, dass das Gehäuseoberteil 3 bzw. das Gehäuseunterteil 4 jeweils mit allen für die Funktion des Bremszylinders 1 erforderlichen Bauteilen im Gehäuseinneren vormontiert ist.

Zunächst werden der gehäuseunterteilseitige Klemmring 30 und das Gehäuseunterteil 4 bereitgestellt und auf eine feste, ringförmige Unterlage (nicht dargestellt) aufgelegt.

Dabei liegt das Gehäuseunterteil 4 mit seiner Anflächung 36 auf der Innenseite 35 des abgewinkelten Schenkel 34 des gehäuseunterteilseitige Klemmrings 30 auf. Der gehäuseunterteilseitige Klemmring 30 liegt hingegen mit seinem abgewinkelten Schenkel 34 auf der festen, ringförmigen Unterlage, die z.B. als Unterteil eines Montagewerkzeuges ausgebildet sein kann, auf.

In einem weiteren Schritt wird die Membran 16 auf den Kragen 15 des Gehäuseunterteils 4 aufgelegt und danach das Gehäuseoberteil 3 mit seinem Kragen 8 auf die Membran 16 aufgelegt.

In einem letzten Schritt wird nun der gehäuseoberteilseitige Klemmring lagerichtig positioniert und mit einem geeigneten ringförmigen Werkzeug (nicht dargestellt) auf die Anflächung 44 des Gehäuseoberteils 3 gepresst, bis die als Schnapphaken 45 ausgebildeten freie Enden 47 der Laschen 46 des gehäuseoberteilseitigen Klemmrings 38 in die Öffnungen 37 des gehäuseunterteilseitigen Klemmrings 30 einrasten.

### Bezugszeichenliste

- 1: Bremszylinder
- 2: Bremszylindergehäuse
- 3: Gehäuseoberteil
- 4: Gehäuseunterteil
- 5: Fluidleitungsanschluss
- 6: Fluidleitungsanschluss
- 7: Ausstülpung
- 8: Kragen
- 9: Gehäuseboden
- 10: Gewindebolzen
- 11: Gewindebolzen
- 12: Öffnung
- 13: Dichtung
- 14: Dichtungsbalg
- 15: Kragen
- 16: Membran
- 17: Wulst
- 18: Keilflanke
- 19: Keilflanke
- 20: Ringförmige Vertiefung
- 21: Druckplatte
- 22: Kreisförmige Sicke
- 23: Druckfeder
- 24: Kolbenstange
- 25: Kegelförmiger Kopf
- 26: Dichtungswulst
- 27: Spannring
- 28: Zentrische Öffnung
- 29: Druckstück
- 30: Gehäuseunterteilseitiger Klemmring
- 31: Innenseite
- 32: Vertikaler Schenkel
- 33: Außenkante
- 34: Abgewinkelter Schenkel
- 35: Innenseite
- 36: Anflächung
- 37: Öffnung
- 38: Gehäuseoberteilseitiger Klemmring
- 39: Innenseite
- 40: Vertikaler Schenkel
- 41: Außenseite
- 42: Abgewinkelter Schenkel
- 43: Innenseite
- 44: Anflächung
- 45: Schnapphaken
- 46: Lasche
- 47: Freies Ende

## Patentansprüche

1. Bremszylinder (1), aufweisend ein Bremszylindergehäuse (2) mit einem Gehäuseoberteil (3) und einem Gehäuseunterteil (4) sowie eine Membran (16), wobei das Gehäuseoberteil (3) Fluidleitungsanschlüsse (5, 6) aufweist und das Gehäuseunterteil (4) Befestigungsmittel (10, 11) zur Befestigung an eine Bremse aufweist, **dadurch gekennzeichnet, dass** das Gehäuseoberteil (3) und das Gehäuseunterteil (4) sowie die Membran (16) an einer Stoßstelle durch einen gehäuseoberseitigen Klemmring (38) und einen gehäuseunterseitigen Klemmring (30) formschlüssig zusammengeklemmt sind.

2. Bremszylinder (1) nach Anspruch 1, **dadurch gekennzeichnet, dass** der gehäuseoberseitigen Klemmring (38) und der gehäuseunterseitigen Klemmring (30) miteinander verrastet sind.

3. Bremszylinder (1) nach einem der vorgenannten Ansprüche, **dadurch gekennzeichnet, dass** der gehäuseoberseitigen Klemmring (38) und der gehäuseunterteilseitigen Klemmring (30) jeweils eine J-förmige Grundgeometrie aufweisen.

4. Bremszylinder (1) nach einem der vorgenannten Ansprüche, **dadurch gekennzeichnet, dass** die J-förmige Grundgeometrie jeweils einen vertikalen Schenkel (32, 40) und einen abgewinkelten Schenkel (34, 42) aufweist.

5. Bremszylinder (1) nach einem der vorgenannten Ansprüche, **dadurch gekennzeichnet, dass** der gehäuseunterteilseitige Klemmring (30) Öffnungen (37) an seinem vertikalen Schenkel (32) aufweist.

6. Bremszylinder (1) nach einem der vorgenannten Ansprüche, **dadurch gekennzeichnet, dass** die Öffnungen (37) in einem regelmäßigen Muster auf dem Umfang des gehäuseunterteilseitigen Klemmrings(30) gleichmäßig angeordnet sind, so dass sich eine Öffnung (37) mit einem Umfangsabschnitt ohne Öffnung (37) abwechselt.

7. Bremszylinder (1) nach einem der vorgenannten Ansprüche, **dadurch gekennzeichnet, dass** der gehäuseoberteilseitigen Klemmring (38) Schnapphaken (45) an seinem vertikalen Schenkel (40) aufweist

8. Bremszylinder (1) nach einem der vorgenannten Ansprüche, **dadurch gekennzeichnet, dass** die Schnapphaken (45) in einem regelmäßigen Muster auf dem Umfang des gehäuseoberteilseitigen Klemmrings (38) gleichmäßig angeordnet sind, so dass sich ein Schnapphaken (45) mit einem Umfangsabschnitt ohne Schnapphaken (45) abwechselt.

9. Bremszylinder (1) nach einem der vorgenannten Ansprüche, **dadurch gekennzeichnet, dass** der Schnapphaken (45) eine zur Öffnung (37) korrespondierende Geometrie und Dimension aufweist.

10. Montageverfahren für einen Bremszylinder (1), **gekennzeichnet durch** folgende Verfahrensschritte:
a) Bereitstellen des gehäuseunterteilseitige Klemmrings (30) und des Gehäuseunterteils (3) und Auflegen beider Bauteile auf eine feste, ringförmige Unterlage eines ebenfalls bereitgestellten Montagewerkzeuges,
b) Auflegen einer Membran (16) auf einen Kragen (15) des Gehäuseunterteils (4), danach Auflegen des Gehäuseoberteils (3) mit seinem Kragen (8) auf die Membran (16).
c) Lagerichtiges Positionieren des gehäuseoberteilseitigen Klemmrings (38) und Aufpressen des Klemmrings (38) mit einem geeigneten, ringförmigen Werkzeug auf eine Anflächung (44) des Gehäuseoberteils (3), bis die als Schnapphaken (45) ausgebildeten freien Enden (47) der Laschen (46) des gehäuseoberteilseitigen Klemmrings (38) in die Öffnungen (37) des gehäuseunterteilseitigen Klemmrings (30) einrasten.

## Claims

1. Brake cylinder (1), having a brake cylinder housing (2) with a housing upper part (3) and a housing lower part (4) and a diaphragm (16), wherein the housing upper part (3) has fluid-line connections (5, 6), and the housing lower part (4) has securing means (10, 11) for securing to a brake, **characterized in that** the housing upper part (3), the housing lower part (4) and the diaphragm (16) are clamped together positively at a joint by a clamping ring (38) on the housing upper side and a clamping ring (30) on the housing lower side.

2. Brake cylinder (1) according to Claim 1, **characterized in that** the clamping ring (38) on the housing upper side and the clamping ring (30) on the housing lower side are latched to one another.

3. Brake cylinder (1) according to one of the preceding claims, **characterized in that** the clamping ring (38) on the housing upper side and the clamping ring (30) associated with the housing lower part each have a J-shaped basic geometry.

4. Brake cylinder (1) according to one of the preceding claims, **characterized in that** the J-shaped basic geometry in each case has a vertical leg (32, 40) and an angled leg (34, 42).

5. Brake cylinder (1) according to one of the preceding claims, **characterized in that** the clamping ring (30) associated with the housing lower part has openings (37) on its vertical leg (32).

6. Brake cylinder (1) according to one of the preceding claims, **characterized in that** the openings (37) are arranged uniformly in a regular pattern on the circumference of the clamping ring (30) associated with the housing lower part, with the result that an opening (37) alternates with a circumferential portion without an opening (37).

7. Brake cylinder (1) according to one of the preceding claims, **characterized in that** the clamping ring (38) associated with the housing upper part has snap hooks (45) on its vertical leg (40).

8. Brake cylinder (1) according to one of the preceding claims, **characterized in that** the snap hooks (45) are arranged uniformly in a regular pattern on the circumference of the clamping ring (38) associated with the housing upper part, with the result that a snap hook (45) alternates with a circumferential portion without a snap hook (45).

9. Brake cylinder (1) according to one of the preceding claims, **characterized in that** the snap hook (45) has a geometry and dimensions corresponding to the opening (37).

10. Assembly method for a brake cylinder (1), **characterized by** the following method steps:
a)provision of the clamping ring (30) associated with the housing lower part and of the housing lower part (3) and placement of both components on a fixed annular support of an assembly tool that is likewise provided,
b)placement of a diaphragm (16) on a collar (15) of the housing lower part (4), followed by placement of the housing upper part (3) by means of its collar (8) on the diaphragm (16),
c)correct positioning of the clamping ring (38) associated with the housing upper part and pressing the clamping ring (38) by means of a suitable annular tool onto a flat (44) on the housing upper part (3) until the free ends (47) of the tabs (46) of the clamping ring (38) associated with the housing upper part, said ends being designed as snap hooks (45), latch into the openings (37) in the clamping ring (30) associated with the housing lower part.

## Revendications

1. Cylindre (1) de frein, comportant une enveloppe (2) de cylindre de frein ayant une partie (3) supérieure de l'enveloppe et une partie (4) inférieure de l'enveloppe ainsi qu'une membrane (16), la partie (3) supérieure de l'enveloppe ayant des raccords (5, 6) de conduite de fluide et la partie (4) inférieure de l'enveloppe ayant des moyens (10, 11) de fixation, pour la fixation à un frein, **caractérisé en ce que** la partie (3) supérieure de l'enveloppe et la partie (4) inférieure de l'enveloppe ainsi que la membrane (16) sont cramponnées ensemble, à complémentarité de forme, en un point de percussion, par une bague (38) de serrage, du côté supérieur de l'enveloppe, et par une bague (30) de serrage, du côté inférieur de l'enveloppe.

2. Cylindre (1) de frein suivant la revendication 1, **caractérisé en ce que** la bague (38) de serrage, du côté supérieur de l'enveloppe, et la bague (30) de serrage, du côté inférieur de l'enveloppe, sont encliquetées l'une à l'autre.

3. Cylindre (1) de frein suivant l'une des revendications précédentes, **caractérisé en ce que** la bague (38) de serrage, du côté supérieur de l'enveloppe, et la bague (30) de serrage, du côté inférieur de l'enveloppe, ont chacune une géométrie de base en forme de J.

4. Cylindre (1) de frein suivant l'une des revendications précédentes, **caractérisé en ce que** la géométrie de base en forme de J a une branche (32, 40) verticale et une branche (34, 42) coudée.

5. Cylindre (1) de frein suivant l'une des revendications précédentes, **caractérisé en ce que** la bague (30) de serrage, du côté inférieur de l'enveloppe, a des ouvertures (37) sur sa branche (32) verticale.

6. Cylindre (1) de frein suivant l'une des revendications précédentes, **caractérisé en ce que** les ouvertures (37) sont disposées uniformément, suivant un motif régulier, sur le pourtour de la bague (30) de serrage, du côté inférieur de l'enveloppe, de manière à ce qu'une ouverture (37) alterne avec un segment périphérique sans ouverture (37).

7. Cylindre (1) de frein suivant l'une des revendications précédentes, **caractérisé en ce que** la bague (38) de serrage, du côté supérieur de l'enveloppe, a des crochets mousquetons (45) sur sa branche (40) verticale.

8. Cylindre (1) de frein suivant l'une des revendications précédentes, **caractérisé en ce que** les crochets mousquetons (45) sont disposés d'une manière uniforme, suivant un motif régulier, sur le pourtour de la bague (38) de serrage, du côté supérieur de l'enveloppe, de manière à ce qu'un crochet mousqueton (45) alterne avec un segment périphérique sans crochet mousqueton (45).

9. Cylindre (1) de frein suivant l'une des revendications précédentes, **caractérisé en ce que** le crochet mousqueton (45) a une géométrie et une dimension correspondant à l'ouverture (37).

10. Procédé de montage d'un cylindre (1) de frein, **caractérisé par** les stades de procédé suivantes :
a) on se procure la bague (30) de serrage, du côté inférieur de l'enveloppe et la partie (3) inférieure de l'enveloppe et on met les deux pièces sur un support annulaire fixe d'un outil de montage que l'on s'est également procuré,
b) on met une membrane (16) sur un collet (15) de la partie (4) inférieure de l'enveloppe, en mettant la partie (3) supérieure de l'enveloppe avec son collet (8) sur la membrane (16),
c) on place en bonne position la bague (38) de serrage, du côté supérieur de l'enveloppe, et on presse la bague (38) de serrage, par un outil annulaire approprié, sur un méplat (44) de la partie (3) supérieure de l'enveloppe, jusqu'à ce que les extrémités (47) libres, constituées en crochets mousquetons (45), des pattes (46) de la bague (38) de serrage, du côté de la partie supérieure de l'enveloppe, s'encliquètent dans les ouvertures (37) de la bague (30) de serrage, du côté de la partie inférieure de l'enveloppe.
